# EUROPÄISCHE PATENTANMELDUNG

(11) **EP 1 083 038 A2**
(43) Veröffentlichungstag der Anmeldung: **14.03.2001**
(21) Anmeldenummer: 00115112.5
(22) Anmeldetag: 12.07.2000
(51) Int. Cl.: B29C 49/56

(54) **Blasformmaschine zum Herstellen von hohlkörperförmigen Artikeln aus thermoplastischem Kunststoff**

(30) Priorität: 07.09.1999 DE 19942600
(71) Anmelder: Fischer-W. Müller Blasformtechnik GmbH, 53842 Troisdorf (DE)
(72) Erfinder: Woop, Heiko, 53604 Bad Honnef-Rottbitze (DE); Schüller, Frank, 50226 Königsdorf (DE)
(74) Vertreter: Valentin, Ekkehard, Dipl.-Ing.

(57) **Zusammenfassung**

Eine Blasformmaschine zum Herstellen von hohlkörperförmigen Artikeln aus thermoplastischem Kunststoff nach dem 3D-Einlegeverfahren oder dem Saugblasverfahren, umfassend ein aus zwei jeweils auf einer Formaufspann- bzw. Schließplatte (2,3) angeordneten Formhälften (4a,4b) bestehendes Werkzeug mit einer vertikalen Trennnaht, das in eine Offenstellung und in eine zum Blasformen verriegelbare Schließstellung bringbar ist, und mindestens einen einen Vorformlingsschlauch bereitstellenden Extrusions- bzw. Coextrusionskopf, der von einem Extruder mit dem Kunststoffmaterial gespeist wird, ermöglicht die Herstellung der Blasform- Artikel mit erheblich verringertem Aufwand, wenn die eine Formaufspannplatte (2) stationär und die andere Formaufspannplatte (3) beweglich ausgebildet ist.

## Beschreibung

Die Erfindung betrifft eine Blasformmaschine zum Herstellen von hohlkörperförmigen Artikeln aus thermoplastischem Kunststoff nach dem 3D-Einlegeverfahren oder dem Saugblasverfahren, umfassend ein aus zwei jeweils auf einer Formaufspann- bzw. Schließplatte angeordneten Formhälften bestehendes Werkzeug mit einer vertikalen Trennnaht, das in eine Offenstellung und in eine zum Blasformen verriegelbare Schließstellung bringbar ist, und mindestens einen einen Vorformlingsschlauch bereitstellenden Extrusions- bzw. Coextrusionskopf, der von einem Extruder mit dem Kunststoffmaterial gespeist wird.

Derartige Blasformmaschinen zur Artikel-Herstellung nach der 3D-Technik oder dem sogenannten Saugblasen sind hinlänglich bekannt. Mit der 3D-Technik (vgl. z.B. den Sonderdruck aus der Zeitschrift Kunststoffe, 83. Jahrgang 1993/9, "Abfallarmes Blasformen komplexer Formteile") läßt sich eine Schweißnaht vermeiden und der Materialeinsatz reduzieren. Der Schließkraftbedarf ist aufgrund der kleineren Quetschkantenlänge geringer als beim konventionellen Blasformen. Eine 3D-Blasformmaschine kann daher mit einem konstruktiv weniger aufwendigen Schließsystem und einer kleineren, preiswerteren Hydraulik ausgerüstet werden.

Beim Saugblasverfahren wird der Vorformlingsschlauch durch das geschlossene Blaswerkzeug gesaugt, das aus den Formhälften mit der Artikelkavität sowie Schieberelementen besteht, die unabhängig voneinander hydraulisch betätigt werden und die Kavität an der Ober- und Unterseite schließen können. An der Werkzeugunterseite ist eine Saugvorrichtung angeordnet. Da der Schlauch in das geschlossene Blaswerkzeug eingesaugt wird, können keine unerwünschten Abquetschungen auftreten, und Saugblasartikel besitzen daher folglich auch keine Schweißnähte. Die Schließkraft wird hier lediglich zum Zuhalten des Blaswerkzeuges gegen die durch den Blasdruck aufgebauten Kräfte benötigt.

Eine Schließeinheit für eine im konventionellen Blasformverfahren betriebene Maschine ist durch die DE 37 22 340 A1 bekanntgeworden. Sie weist einen aus mindestens einer Zugstange, einer Druckstange sowie zwei diese an ihren Enden miteinander verbindenden Jochen bestehenden Rahmen auf, bei dem die Zug- und Druckstangen parallel und die Joche quer zur Verschieberichtung der die Formhälften tragenden Formaufspannplatten verlaufen. Um eine beim Schließkraftaufbau nachteilige Beaufschlagung des von der Krafteinleitung her gesehen hinteren Joches zu vermeiden, ist eine aufwendige Konstruktion erforderlich, um die Führung und den Gleichlauf der durch einen Kraftantrieb zueinander gegenläufig bewegbaren Formhälften nicht unnötig zu belasten und unsymmetrische Schließkraftdeformationen zu vermeiden.

Die - wie auch beim Saugblasen und der 3D-Technik erforderliche - Gleichlaufvorrichtung dient dazu, daß die beiden Formaufspannplatten der Schließeinheit und damit auch die von diesen getragenen Formhälften des Formwerkzeuges bei Betätigung des den Schließmotor bildenden Kraftantriebs, z.B. eine hydraulische oder pneumatische Kolben-Zylinder-Einheit, zueinander gegenläufig synchron relativ zu einer vorgegebenen Kalibrierposition bewegt werden können. Vor allem beim konventionellen Blasformen wird die Schließeinheit aüßerdem in bekannter Weise mit Hilfe eines besonderen Transportsystems zwischen zwei verschiedenen Arbeitsstationen, einer Schlauchextrusions- und einer Blasstation, hin- und herbewegt.

Der Erfindung liegt die Aufgabe zugrunde, eine Blasformmaschine der eingangs genannten Art zu schaffen, die mit erheblich verringertem Aufwand das Herstellen der Hohlkörper-Artikel ermöglicht.

Diese Aufgabe wird in verblüffend einfacher Weise erfindungsgemäß dadurch gelöst, daß die eine Formaufspannplatte stationär und die andere Formaufspannplatte beweglich ausgebildet ist. Es läßt sich damit eine für das abfallarme Blasformen (Saugblasverfahren, 3D-Schlauchmanipulation) geeignete Schließeinheit erreichen, die keine Gleichlaufvorrichtung mehr erfordert, und zwischen den beiden mit einer vertikalen Trennaht angeordneten Formaufspannplatten braucht keine weitere mechanische Verbindung (z.B. Holme) mehr vorgesehen zu werden. Die benötigte Zuhaltekraft läßt sich in einfacher Weise durch gegebenenfalls lediglich an einer Formaufspannplatte angeordneten hydraulischen, elektromechanischen oder pneumatischen Verriegelungseinheiten, alternativ durch einen direkt auf die bewegliche Platte wirkenden Schließantrieb aufbringen. Gleichzeitig bietet sich eine hohe Flexibilität der Formöffnungsweiten, wobei im Gegensatz zu allen bekannten Schließeinheiten wegen der stationären, d.h. in Schließrichtung nicht beweglichen Formaufspannplatte lediglich noch 50% Masse bewegt werden muß. Hierdurch ergibt sich eine entsprechende Energieeinsparung und weiterhin ein geringerer Verschleiß an den Antriebs- und Führungselementen. Die Maschine läßt sich insgesamt mit weniger Bauteilen verwirklichen.

Es empfiehlt sich, daß die bewegliche Formaufpannplatte auf Linearführungen angeordnet ist, die unterhalb des Formaufspannbereiches verlaufen und ein problemloses Verschieben der beweglichen Formaufspannsplatte in die Offen- bzw. Schließstellung erlauben. Als Antrieb der zweiten, beweglichen Formaufspannplatte zum Öffnen und Schließen der Blasform können elektromechanische (z.B. Spindel, Zahnriemen, Zahnstange, oder dergleichen) oder elektrohydraulische Einrichtungen zum Einsatz kommen.

Wenn die Linearführungen nach einer Ausgestaltung der Erfindung vorteilhaft im Maschinengrundrahmen integriert sind, reduziert sich die Bauhöhe der Blasformmaschine.

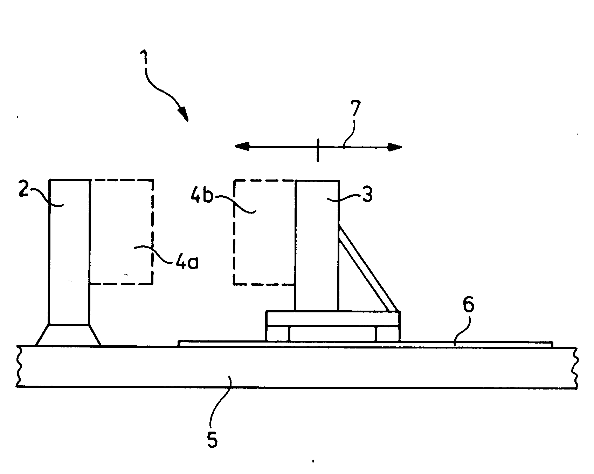

Weitere Einzelheiten und Vorteile der Erfindung ergeben sich aus den Patentansprüchen und der nachfolgenden Beschreibung, in der in der einzigen Zeichnungsfigur in sehr schematischer Weise ein Ausführungsbeispiel des Gegenstandes der Erfindung dargestellt ist.

Von einer als solche hinlänglich bekannten Blasformmaschine (3D-technik oder Saugblasen) zum Herstellen von Gegenständen aus thermoplastischem Kunststoff ist in der Figur als Einzelheit schematisch deren Schließeinheit 1 gezeigt. Diese besteht aus einer stationären, feststehenden Formaufspannplatte 2 und einer beweglichen Formaufspannplatte 3; jede dieser Formaufspannplatten 2, 3 trägt eine Formhälfte 4a bzw. 4b, die ein die Artikelkavität aufweisendes Blasformwerkzeug mit einer vertikalen Trennnaht bilden. Die feststehende Formaufspann- bzw. Schließplatte 2 ist wie die bewegliche Formaufspannplatte 3 auf einem Maschinen-Grundrahmen 5 angeordnet, der mit einer Linearführung 6 für die mit einem nicht dargestellten Antrieb aus der gezeigten Offenstellung der Formhälften 4a, 4b in die geschlossene Blasstellung bewegliche Formaufspannplatte 3 versehen ist. Die Verfahrbarkeit der in Schließrichtung und umgekehrt beweglichen Formaufspannplatte 3 wird durch den Doppelpfeil 7 verdeutlicht.

Die Schließeinheit 1 mit der nur einen beweglichen Formaufspannplatte 3 benötigt insbesondere keine Gleichlaufvorrichtung und ebenso keine weitere mechanische Verbindung, wie Holme, zwischen den beiden Formaufspannplatten 2, 3. Neben den eingangs schon genannten Vorzügen bietet die feststehende, stationäre Formaufspannplatte 2 darüber hinaus zudem den Vorteil, daß sich Zusatzinstallationen wie Pneumatik, Elektrik, Hydraulik, Wasser usw. ohne Erfordernis einer Möglichkeit zur Abwicklung der Schlauch- bzw. Kabelanschlüsse dieser Installations-Bauteile anbringen lassen.

## Patentansprüche

1. Blasformmaschine zum Herstellen von hohlkörperförmigen Artikeln aus thermoplastischem Kunststoff nach dem 3D-Einlegeverfahren oder dem Saugblasverfahren, umfassend ein aus zwei jeweils auf einer Formaufspann- bzw. Schließplatte angeordneten Formhälften bestehendes Werkzeug mit einer vertikalen Trennnaht, das in eine Offenstellung und in eine zum Blasformen verriegelbare Schließstellung bringbar ist, und mindestens einen einen Vorformlingsschlauch bereitstellenden Extrusions- bzw. Coextrusionskopf, der von einem Extruder mit dem Kunststoffmaterial gespeist wird,
**dadurch gekennzeichnet,**
daß die eine Formaufspannplatte (2) stationär und die andere Formaufspannplatte (3) beweglich ausgebildet ist.

2. Blasformmaschine nach Anspruch 1,
**dadurch gekennzeichnet,**
daß die bewegliche Formaufspannplatte (3) auf Linearführungen (6) angeordnet ist.

3. Blasformmaschine nach Anspruch 2,
**dadurch gekennzeichnet,**
daß die Linearführungen (6) im Maschinengrundrahmen (5) integriert sind.
